# EUROPEAN PATENT APPLICATION

(11) **EP 4 825 489 A1**
(43) Date of publication of application: **21.10.2026**
(21) Application number: 24902003.3
(22) Date of filing: 11.05.2024
(51) Int. Cl.: B01J 27/22, B01J 37/00, C10G 2/00

(54) **METALLIC THETA-IRON CARBIDE COMPOUND, PREPARATION METHOD THEREFOR, AND USE THEREOF**

(30) Priority: 15.12.2023 CN 202311737116
(71) Applicant: China Energy Investment Corporation Limited, Beijing 100011 (CN); National Institute of Clean-and-Low-Carbon Energy, Beijing 102211 (CN)
(72) Inventor: WANG, Peng, Beijing 102211 (CN); MEN, Zhuowu, Beijing 102211 (CN); LV, Yijun, Beijing 102211 (CN); CHAI, Jiachun, Beijing 102211 (CN); LIN, Quan, Beijing 102211 (CN); JIANG, Jidong, Beijing 102211 (CN); WANG, Annan, Beijing 102211 (CN); JIANG, Fuguo, Beijing 102211 (CN); ZHANG, Xuebing, Beijing 102211 (CN); FENG, Bo, Beijing 102211 (CN)
(74) Representative: Studio Torta S.p.A.
(86) International application number: PCT/CN2024/092674
(87) International publication number: WO 2025/123573

(57) **Abstract**

The present invention relates to a metallic θ-iron-carbide composite, a preparation method therefor, and a use thereof. The method comprises: S1, performing reduction and surface purification treatment on a precursor at 300-500°C under the action of hydrogen to obtain an intermediate product; and S2, performing carbide preparation treatment on the intermediate product at 300-470°C in a mixed gas atmosphere. The metallic θ-iron-carbide composite according to one embodiment of the present disclosure is used as a catalyst for a syngas conversion reaction, so that the reaction has extremely low overall CO₂ selectivity.

## Description

### TECHNICAL FIELD

The present disclosure relates to syngas conversion, and in particular to a θ-iron-carbide composite capable of being used for syngas conversion and a preparation method therefor.

### BACKGROUND

The primary energy production in China is characterized by rich coal, insufficient oil, and a lack of natural gas. With the development of China's economy, the degree of dependence on imported petroleum has been continuously rising. Syngas is a mixed gas (consisting of CO and H₂) obtained by the gasification of coal, natural gas, and biomass. The syngas conversion technology has become an increasingly important energy conversion pathway in recent years. It can be used to gasify carbonaceous matter, such as coal, natural gas, and biomass, to obtain syngas, which is then converted into liquid fuels and high-value chemicals.

The reaction equation for syngas conversion is as follows:

(2*n*+1)H₂ + *n*CO →C*ₙ*H_{2*n*+2} + *n*H₂O (a)

*2n*H₂ + *n*CO → C*ₙ*H*₂ₙ* + nH₂O (b)

*(n+1)*H₂ + 2nCO → CₙH*₂ₙ₊₂* + *n*CO₂ (c)

*n*H₂ + *2n*CO → C*ₙ*H*₂ₙ* + *n*CO₂ (d)

Iron-based catalysts are the least expensive and readily available catalysts for syngas conversion. The iron-based catalysts have the advantages of relatively high activity, a wide application condition window, strong sulfur resistance, simple and convenient on-line catalyst replacement, suitability for industrial continuous production, and the like. However, one of the bottleneck problems existing in the traditional iron-based catalysts for the syngas conversion technology is that they have excessively high CO₂ selectivity (usually 35-45% of the converted starting material CO).

The paper ("Pathways for CO2 Formation and Conversion During Fischer-Tropsch Synthesis on Iron-Based Catalysts" (Catalysis Letters volume 80, pages 77-86 (2002))) published by the Professor Enrique Iglesia elucidates that there are two sources of CO₂ production in syngas conversion reactions achieved by the Fischer-Tropsch synthesis principle: (1) primary CO₂ directly from one Fischer-Tropsch synthesis reaction (see equations (c) and (d) above); and (2) secondary CO₂ produced at a relatively high CO conversion rate by a water-gas-shift reaction (WGS reaction, CO + H₂O → CO₂ + H₂) of H₂O and CO.

Disclosed in the prior art is a high-purity iron carbide catalyst, which can reduce the primary CO₂ of the Fischer-Tropsch synthesis reaction to near zero while achieving high CO space-time conversion rates, thereby reducing the overall CO₂ selectivity to <5% at a low CO conversion rate (typically less than 35%). However, as the CO conversion rate increases, the WGS reaction becomes more vigorous with the increase in the H₂O content in the reaction environment, causing an increase in secondary CO₂, which ultimately leads to an increase in the overall CO₂ selectivity at a high CO conversion rate.

In addition, reducing the CO₂ selectivity can greatly improve the utilization efficiency of carbon atoms and substantially improve the economy and environmental friendliness of the syngas conversion technology. Therefore, how to inhibit the water-gas-shift side reaction, reduce the CO₂ selectivity, and improve the utilization efficiency of carbon atoms at a high CO conversion rate has become one of the common key problems in the field of syngas conversion. In another aspect, in addition to CO₂, another major by-product in the field of syngas conversion is methane. In the reaction, higher CH₄ selectivity and higher CO₂ selectivity together reduce the effective product selectivity of the reaction.

### SUMMARY

In order to overcome at least one defect of the prior art described above, in a first aspect, one embodiment of the present disclosure provides a preparation method for a metallic θ-iron-carbide composite, comprising the following steps:
S0: providing a precursor, the precursor is nanoiron and/or a nano iron compound or nanoiron and/or a nano iron compound comprising bromide ions and/or iodide ions; and the nano iron compound is capable of preparing nanoiron by a reduction reaction;
S1: performing reduction and surface purification treatment on the precursor at 300-500 °C under the action of hydrogen to obtain an intermediate product; and
S2: performing carbide preparation treatment on the intermediate product at 300-470 °C in a mixed gas atmosphere;
wherein the mixed gas comprises hydrogen and carbon monoxide in a molar ratio of 5:1 to 110:1;
a first impregnation treatment is performed on said nanoiron and/or nano iron compound by an impregnation solution to obtain said nanoiron and/or nano iron compound comprising bromide ions and/or iodide ions; when the precursor is said nanoiron and/or nano iron compound, a second impregnation treatment is performed on the product in step S2 by the impregnation solution.

In a second aspect, one embodiment of the present disclosure provides a θ-iron-carbide composite prepared by the preparation method described above.

In a third aspect, one embodiment of the present disclosure provides a θ-iron-carbide composite comprising θ-iron-carbide and a halogen element, the θ-iron-carbide and the halogen element being in a molar ratio of 100:(0.1-40), wherein the halogen element is a bromine element and/or an iodine element; and the number of moles of the θ-iron-carbide is based on the number of moles of an iron element contained therein.

In a fourth aspect, one embodiment of the present disclosure provides a catalyst comprising a θ-iron-carbide composite prepared by the preparation method described above or the θ-iron-carbide composite described above.

In a fifth aspect, one embodiment of the present disclosure provides use of a θ-iron-carbide composite prepared by the preparation method described above, the θ-iron-carbide composite described above, or the catalyst described above in a syngas conversion reaction.

In a sixth aspect, one embodiment of the present disclosure provides use of a θ-iron-carbide composite prepared by the preparation method described above, the θ-iron-carbide composite described above, or the catalyst described above in a reaction for the synthesis of C and H fuels and/or chemicals on the basis of the Fischer-Tropsch synthesis principle.

In a seventh aspect, one embodiment of the present disclosure provides a syngas conversion process, comprising contacting the catalyst described above with syngas under reaction conditions.

The θ-iron-carbide composite according to one embodiment of the present disclosure may be used as a catalyst for a syngas conversion reaction, particularly for a Fischer-Tropsch synthesis reaction. By introducing halide ions, such as bromide or iodide ions, into the θ-iron-carbide composite, the reaction has a relatively high CO conversion rate, extremely low overall CO₂ selectivity, and low CH₄ selectivity, thereby achieving the comprehensive optimization of reaction results.

### BRIEF DESCRIPTION OF THE DRAWINGS

The accompanying drawings are provided solely for the purpose of illustrating specific examples and is not to be construed as limiting the present disclosure. In the accompanying drawings,

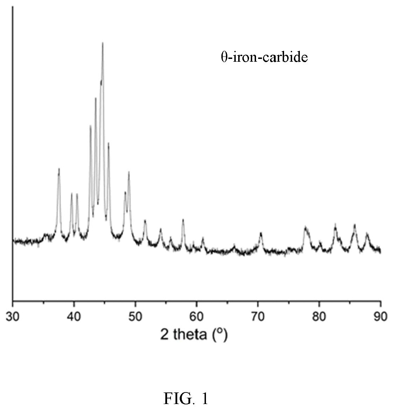

FIG. 1 shows an XRD pattern of the θ-iron-carbide composite CX1 prepared in Example 1 of the present disclosure.

### DETAILED DESCRIPTION

Exemplary embodiments that embody the features and advantages of the present disclosure are described in detail in the following description. It should be understood that the present disclosure can have various changes in different embodiments without departing from the scope of the present disclosure, and the description therein is for illustrative purposes in nature and is not intended to limit the present disclosure.

One embodiment of the present disclosure provides a θ-iron-carbide composite comprising θ-iron-carbide and a halogen element, the θ-iron-carbide and the halogen element being in a molar ratio of 100:(0.1-40);
wherein the halogen element is a bromine element and/or an iodine element; the composite has an orthorhombic crystal structure, and the average crystal grain diameter is 7-42 nm, and may further be 9-35 nm; herein, the number of moles of the θ-iron-carbide is based on the number of moles of an iron element contained therein.

In one embodiment, the halogen element is present in the form of a halide ion, which may be a bromide ion and/or an iodide ion. The θ-iron-carbide and the halogen element (or the halide ion) may be in a molar ratio of 100:(0.1-40), further 100:(0.35-32), and still further 100:(7-20), such as 100:0.5, 100:1, 100:5, 100:10, 100:15, 100:20, 100:25, 100:30, or 100:40.

In one embodiment, the θ-iron-carbide composite comprises a halide cation, and the halide cation is capable of maintaining charge balance with the halide ion, that is, the total number of negative charges of halide ions (or the total number of displayed valences) is equal to the total number of positive charges of halide cations.

In one embodiment, the θ-iron-carbide composite further comprises an additional cationic element, and the additional cationic element is present in the form of an additional cation. The θ-iron-carbide and the additional cationic element (or the additional cation) may be in a molar ratio of 100:(0.1-22), further 100:(0.1-18), and still further 100:(0.1-10), such as 100:0.5, 100:1, 100:3, 100:5, 100:7, 100:10, 100:15, or 100:20.

In one embodiment, the additional cation is a halide cation, or the θ-iron-carbide composite comprises both a halide cation and an additional cation.

In one embodiment, the θ-iron-carbide composite further comprises an additional anion, and when the composite comprises both the halide cation and the additional cation, the additional anion is capable of maintaining charge balance with the additional cation.

In one embodiment, the additional cationic element may be selected from one or more of manganese, copper, cobalt, molybdenum, chromium, a rare earth element, an alkali metal element, and an alkaline earth metal element; preferably, the additional cationic element is selected from one or more of manganese, copper, cobalt, molybdenum, chromium, lanthanum, cerium, neodymium, sodium, potassium, calcium, and barium. Accordingly, the additional cation may be selected from one or more of a manganese ion, a copper ion, a cobalt ion, a molybdenum ion, a chromium ion, a rare earth ion, an alkali metal ion, and an alkaline earth metal ion; for example, the additional cation may be a manganese ion (e.g., a divalent, trivalent, or tetravalent manganese ion), a copper ion (e.g., a monovalent or divalent copper ion), a cobalt ion (e.g., a divalent cobalt ion), a molybdenum ion (e.g., a divalent, trivalent, or tetravalent molybdenum ion), a chromium ion (e.g., a trivalent chromium ion), a lanthanum ion (e.g., a trivalent or tetravalent lanthanum ion), a cerium ion (e.g., a trivalent or tetravalent cerium ion), a neodymium ion (e.g., a trivalent or tetravalent neodymium ion), a sodium ion, a potassium ion, a calcium ion, and a barium ion.

In one embodiment, the halide cation comprises one or more of a first metal ion and a complex cation. Further, the first metal ion comprises one or more of an iron ion (e.g., a divalent or trivalent iron ion), a manganese ion (e.g., a divalent manganese ion), a copper ion (e.g., a monovalent or divalent copper ion), a cobalt ion (e.g., a divalent cobalt ion), a molybdenum ion (e.g., a divalent, trivalent, or tetravalent molybdenum ion), a lanthanum ion (e.g., a trivalent or tetravalent lanthanum ion), a cerium ion (e.g., a trivalent or tetravalent cerium ion), and a neodymium ion (e.g., a trivalent or tetravalent neodymium ion); the complex cation comprises one or more of a hexaammine manganese ion, a hexaammine iron ion, and a hexaammine copper ion.

In one embodiment, the additional anion comprises one or more of an oxygen ion, a complex ion, and an acid radical ion, such as an oxygen ion, nitrate, citrate, and gluconate.

One embodiment of the present disclosure provides a preparation method for the θ-iron-carbide composite described above, comprising the following steps:
S1: performing reduction and surface purification treatment on a precursor at 300-500 °C under the action of hydrogen to obtain an intermediate product; and
S2: performing carbide preparation treatment on the intermediate product at 300-470 °C in a mixed gas atmosphere;
wherein the mixed gas comprises hydrogen and carbon monoxide, and hydrogen and carbon monoxide are in a molar ratio of 5:1 to 110:1;
the precursor is nanoiron and/or a nano iron compound subjected to a first impregnation treatment by an impregnation solution, the nano iron compound is capable of preparing nanoiron by a reduction reaction, and the impregnation solution comprises bromide ions and/or iodide ions; or
the precursor is nanoiron and/or a nano iron compound, and a second impregnation treatment is performed on the product in step S2 by the impregnation solution.

In one embodiment, the nano iron compound comprises one or more of nano iron oxide, nano magnetite, nano goethite, and nano iron hydrous oxide.

In one embodiment, the nanoiron or the nano iron compound may be nanoiron powder and/or nanoiron particles.

In one embodiment, the average crystal grain diameter of the nanoiron or the nano iron compound is 6-35 nm, and may further be 9-28 nm, such as 10 nm, 12 nm, 15 nm, 18 nm, 20 nm, 22 nm, 25 nm, 30 nm, or 32 nm.

In one embodiment, the impregnation solution is prepared by dissolving an impregnation compound in a solvent, the impregnation compound may comprise a water-soluble halide, and the halide comprises a bromide and/or an iodide. Further, the halide comprises one or more of a bromide and an iodide containing manganese, molybdenum, cobalt, a rare earth metal element, iron, and copper; for example, the halide may be one or more of manganese bromide, iron(II) bromide, copper bromide, cobalt bromide, molybdenum bromide, manganese iodide, iron(II) iodide, copper iodide, a rare earth bromide, a rare earth iodide, hexaammine manganese bromide, hexaammine iron bromide, hexaammine copper bromide, hexaammine manganese iodide, hexaammine iron iodide, and hexaammine copper iodide.

In one embodiment, the concentration of the halide in the impregnation solution may be 0.7-7 mol/L, such as 1 mol/L, 2 mol/L, 3 mol/L, 5 mol/L, or 6 mol/L.

In one embodiment, the solvent of the impregnation solution comprises water and/or ethanol; for example, the solvent may be water or a mixture of ethanol and water.

In one embodiment, the solute of the impregnation solution further comprises an additional compound, and the additional compound comprises one or more of salts (organic and/or inorganic salts) of manganese, copper, cobalt, molybdenum, a rare earth metal, an alkali metal, and an alkaline earth metal. For example, the additional compound may be one or more of potassium nitrate, sodium nitrate, manganese nitrate, copper nitrate, cobalt nitrate, molybdenum nitrate, calcium nitrate, barium nitrate, rare earth nitrate, potassium carbonate, sodium carbonate, potassium citrate, sodium citrate, manganese citrate, copper citrate, cobalt citrate, molybdenum citrate, calcium citrate, barium citrate, potassium gluconate, sodium gluconate, lithium gluconate, rubidium gluconate, cesium gluconate, manganese gluconate, copper gluconate, and calcium gluconate.

In one embodiment, no chemical reaction occurs between the solute components of the impregnation solution. For example, the solute does not comprise both potassium carbonate and calcium nitrate.

In one embodiment, the amounts of the halide and the additional compound used may be appropriately selected according to the content of each ion in the composite to be prepared. Further, the concentration of the halide or the additional compound may be 0.7-7 mol/L, such as 1 mol/L, 2 mol/L, 3 mol/L, 5 mol/L, or 6 mol/L.

In one embodiment, the precursor is nanoiron or a nano iron compound subjected to a first impregnation treatment by an impregnation solution, and the first impregnation treatment or the second impregnation treatment is performed at a temperature of 0-50 °C, and may further be performed at a temperature of 20-30 °C, such as 10 °C, 15 °C, 20 °C, 25 °C, 30 °C, 35 °C, 40 °C, or 45 °C; the first impregnation treatment or the second impregnation treatment may be performed for 0.1-12 h, further 0.2-10 h, and still further 0.3-9 h, such as 0.5 h, 1 h, 2 h, 3 h, 5 h, 6 h, or 8 h.

In one embodiment, the material after the first impregnation treatment or the second impregnation treatment may be dried at 15-40 °C, and further dried in the dark. The drying may be performed at a temperature of, for example, 20 °C, 25 °C, 30 °C, or 35 °C; the drying may be performed for 0.5-12 h. The drying treatment may be performed under normal pressure or under reduced pressure.

In one embodiment, the first impregnation treatment or the second impregnation treatment may be performed using one of a slurry impregnation method, a saturated impregnation method, a supersaturated impregnation method, or other applicable impregnation methods.

In one embodiment, the reduction and surface purification treatment in step S1 may be performed at a temperature of 300-500 °C, such as 350 °C, 400 °C, 420 °C, 450 °C, 460 °C, 480 °C, or 500 °C; the treatment may be performed under a pressure of 0.13-9.5 atm, and further 0.22-2.5 atm, such as 0.15 atm, 0.2 atm, 0.5 atm, 0.8 atm, 1 atm, 1.5 atm, 2 atm, 5 atm, 8 atm, or 9 atm; the treatment may be performed for 1.2-26 h, and further 2-12 h, such as 5 h, 8 h, 10 h, 15 h, 20 h, or 25 h.

In one embodiment, the gas flow rate of H₂ in step S1 may be 600-21000 mL/h/g, and further 1200-16000 mL/h/g, such as 1000 mL/h/g, 1500 mL/h/g, 2000 mL/h/g, 3000 mL/h/g, 5000 mL/h/g, 6000 mL/h/g, 8000 mL/h/g, 10000 mL/h/g, 12000 mL/h/g, or 15000 mL/h/g.

In one embodiment, the mixed gas in step S2 comprises hydrogen and carbon monoxide, and hydrogen and carbon monoxide may be in a molar ratio of 5:1 to 110:1, such as 10:1, 20:1, 30:1, 36:1, 40:1, 50:1, 60:1, 80:1, or 100:1. The mixed gas may be a mixture of hydrogen and carbon monoxide.

In one embodiment, the treatment in step S2 may be performed at a temperature of 300-470 °C, such as 300 °C, 320 °C, 330 °C, 350 °C, 380 °C, 400 °C, or 420 °C; the treatment may be performed under a pressure of 0-21 atm, and further 0.01-17 atm, such as 0.1 atm, 0.2 atm, 0.5 atm, 0.8 atm, 1 atm, 1.5 atm, 2 atm, 3 atm, 5 atm, 8 atm, 10 atm, 12 atm, 15 atm, 18 atm, or 20 atm; the treatment may be performed for 3-72 h, and further 5-48 h, such as 10 h, 20 h, 25 h, 30 h, 40 h, 45 h, 50 h, 55 h, 60 h, or 70 h.

In one embodiment, the gas flow rate of the mixed gas in step S2 may be 500-31000 mL/h/g, and further 1500-17000 mL/h/g, such as 1000 mL/h/g, 3000 mL/h/g, 5000 mL/h/g, 6000 mL/h/g, 7000 mL/h/g, 8000 mL/h/g, 10000 mL/h/g, 12000 mL/h/g, 15000 mL/h/g, 18000 mL/h/g, 25000 mL/h/g, or 30000 mL/h/g.

In one embodiment, in step S2, the temperature of the system is raised or lowered from 300-500 °C to 300-470 °C at a ramp rate of 0.2-5 °C/min, and further, the temperature of the system is raised or lowered from 300-500 °C to 300-400 °C at a ramp rate of 0.2-2.5 °C/min; the ramp rate in step S2 may be, for example, 0.5 °C/min, 0.8 °C/min, 1 °C/min, 1.2 °C/min, 1.5 °C/min, 1.8 °C/min, 2 °C/min, 2.2 °C/min, 3 °C/min, or 4 °C/min.

In one embodiment, preferably, steps S1 and S2 and the first or second impregnation treatment are all performed in the dark.

In one embodiment, the preparation method for the metallic θ-iron-carbide composite comprises the following steps:
S0: performing a first impregnation treatment on nanoiron and/or a nano iron compound by an impregnation solution to obtain a precursor to be treated;
S1: performing reduction and surface purification treatment on a precursor at 300-500 °C under the action of hydrogen to obtain an intermediate product; and
S2: treating the intermediate product at 300-470 °C in a mixed gas atmosphere to obtain a θ-iron-carbide composite containing a halogen element.

In another embodiment, the preparation method for the metallic θ-iron-carbide composite comprises the following steps:
S1: performing reduction and surface purification treatment on a precursor (nanoiron and/or a nano iron compound) at 300-500 °C under the action of hydrogen to obtain an intermediate product;
S2: treating the intermediate product at 300-470 °C in a mixed gas atmosphere; and
S21: performing a second impregnation treatment on the product in step S2 to obtain a θ-iron-carbide composite containing a halogen element.

One embodiment of the present disclosure provides a catalyst comprising the θ-iron-carbide composite described above.

One embodiment of the present disclosure provides use of the θ-iron-carbide composite or the catalyst described above in a syngas conversion reaction.

In one embodiment, the syngas conversion reaction may be a Fischer-Tropsch synthesis reaction, or other reactions on the basis of the Fischer-Tropsch synthesis principle, such as a reaction in which the syngas is used as a starting material and the final product is an alcohol.

In one embodiment, the syngas comprises CO and H₂.

One embodiment of the present disclosure provides use of the θ-iron-carbide composite or the catalyst described above in a reaction for the synthesis of C and H fuels and/or chemicals on the basis of the Fischer-Tropsch synthesis principle. The reaction on the basis of the Fischer-Tropsch synthesis principle refers to a reaction in which chain hydrocarbons and/or oxygen-containing derivatives thereof are generated by CO hydrogenation and carbon chain growth reactions using syngas (a mixed gas of CO and H₂) as a starting material in the presence of a catalyst and under appropriate conditions.

In one embodiment, the reaction described above is a Fischer-Tropsch synthesis reaction, and the reaction may be performed at a temperature of 280-340 °C, such as 290 °C, 300 °C, 310 °C, or 320 °C; the reaction may be performed under a pressure of 2-3.5 MPa; and the molar ratio of H₂/CO may be 1.7-2.15.

One embodiment of the present disclosure provides a syngas conversion process, comprising contacting the catalyst described above with syngas under syngas conversion reaction conditions.

In one embodiment, the syngas conversion may be performed in a high-temperature and high-pressure continuous reactor.

The θ-iron-carbide composite according to one embodiment of the present disclosure may be used as a catalyst for a syngas conversion reaction. By introducing halide ions into the θ-iron-carbide, the reaction has a relatively high CO conversion rate, extremely low overall CO₂ selectivity, and low CH₄ selectivity. Meanwhile, benefiting from the very high CO space-time conversion rate of the θ-iron-carbide composite catalyst, it exhibits considerable activity.

The θ-iron-carbide composite according to one embodiment of the present disclosure may be used as a catalyst for a syngas conversion reaction, and can enable the reaction to maintain extremely low CO₂ selectivity at a high CO conversion rate, while also maintaining low CH₄ selectivity and relatively high reaction stability, thereby greatly improving the utilization efficiency of carbon atoms and the effective product selectivity, overcoming the key technical bottleneck, promoting the high-end, diversified, and low-carbon development of the clean conversion of syngas, and indicating a new trend and direction for the development of modern syngas chemical industry.

The θ-iron-carbide composite according to one embodiment of the present disclosure, as a catalyst for a Fischer-Tropsch synthesis reaction, can be subjected to a continuous and stable reaction for 300 h or more in a high-pressure continuous reactor under industrial Fischer-Tropsch synthesis reaction conditions, and the CO₂ selectivity is 5% or less, and further 3% or less; the selectivity of the by-product CH₄ may be maintained at 8.5% or less, and further 5.5% or less; the utilization efficiency of carbon atoms is maintained at 95% or more, and further 97% or more; and the effective product selectivity may reach 86.5% or more, and further 92% or more.

In one embodiment, the Fischer-Tropsch synthesis reaction catalyzed by the θ-iron-carbide composite may achieve CO₂ selectivity of < 5%, utilization efficiency of carbon atoms of > 95%, and effective product selectivity of > 90% at a CO conversion rate of 70% or more.

As used herein, the "ion" comprised in the composite includes all particles that are bound to other particles by covalent bonds and/or ionic bonds. For example, the bromide ion in the composite includes both Br⁻ that interacts with K⁺ via an ionic bond and a Br atom that interacts with an H atom via a covalent bond.

All pressure values involved herein are gauge pressures.

Hereinafter, the θ-iron-carbide composite according to one embodiment of the present disclosure and use thereof are further described with reference to the accompanying drawings and specific examples. The test methods involved are as follows:
1. During the reaction processes of the examples or comparative examples, an in-situ XRD detection was used to monitor the crystal phase changes of the materials with an X-ray diffractometer (Rigaku, model: D/max-2600/PC), and the crystal structure of the θ-iron-carbide composite was determined by the X-ray diffractometer.
2. The average crystal grain diameter of the θ-iron-carbide composite was obtained by XRD testing.
3. The θ-iron-carbide composite was detected using a Mössbauer spectrometer (Transmission ⁵⁷Fe spectrometer, ⁵⁷Co(Rh) source, sinusoidal velocity mode) to obtain the composition of the composite.
4. Elemental detection was performed on the θ-iron-carbide composite using an inductive coupled plasma emission spectrometer (ICP).
5. In the process of the syngas conversion reaction, the product obtained from the reaction was subjected to gas chromatography analysis (Agilent 7890 gas chromatograph) for the calculation of conversion rate, selectivity, etc., where the product refers to the tail gas collected from the tail end of the reactor, including generated hydrocarbon compounds, alcohol compounds, CO₂, etc.
6. The CO conversion rate%, CO₂ selectivity%, CH₄ selectivity%, utilization efficiency of carbon atoms%, and effective product selectivity% were calculated by the following formulas: 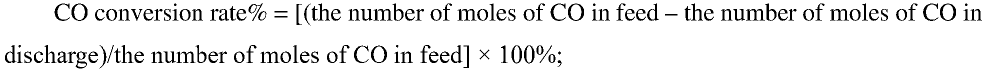 CO conversion rate% = [(the number of moles of CO in feed - the number of moles of CO in discharge)/the number of moles of CO in feed] × 100%; 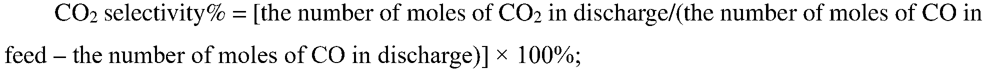 CO2 selectivity% = [the number of moles of CO2 in discharge/(the number of moles of CO in feed - the number of moles of CO in discharge)] × 100%; 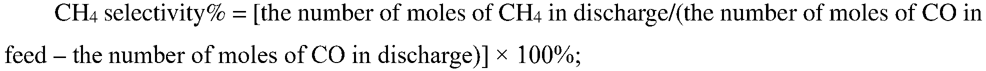 CH4 selectivity% = [the number of moles of CH4 in discharge/(the number of moles of CO in feed - the number of moles of CO in discharge)] × 100%; $utilization efficiency of carbon atoms % = \left(1-{CO}_{2} selectivity%\right) \times 100 % ;$ $effective product selectivity % = \left(1-{CO}_{2} selectivity%-{CH}_{4} selectivity%\right) \times 100 % .$

### EXAMPLES

### Example 1

S1: At 430 °C and under a pressure of 2.0 atm, 5.6 g of nanoiron particles having an average crystal grain diameter of 20 nm were weighed out and kept in H₂ at a flow rate of 12000 mL/h/g for 2 h for reduction and surface purification treatment to obtain an intermediate product.

S2: The intermediate product was cooled to 420 °C and in contact with a mixed gas at this temperature to prepare a pre-carbide, wherein the pressure of the system was 2.0 atm, the flow rate of the mixed gas was 10000 mL/h/g, and the treatment time was 6 h; the mixed gas was a mixed gas of H₂ and CO, and the molar ratio of H₂ to CO was 30:1.

S21: Manganese bromide and potassium nitrate were dissolved in 50 mL of water to prepare an impregnation solution; the impregnation solution was mixed with the product in step S2, and an impregnation treatment was performed by a slurry impregnation method at an impregnation ratio (molar ratio) of Fe:Br:K = 100:7.0:2.0 and at an impregnation temperature of 32 °C for 2 h; the impregnated solid material was dried at 35 °C for 7 h; and after the treatment was completed, a θ-iron-carbide composite was prepared and labeled as CX1.

The metallic θ-iron-carbide composites in Examples 1-1 to 3-8 were all prepared using substantially the same starting materials and process as in Example 1, the only difference being that the content or type of halide ions or the additional cation in the impregnation solution was different. The prepared composites were sequentially labeled as CX1-1 to CX3-8 using the same numbering as in Example 1. Due to the minimal loss of materials during preparation, the content of each substance in the prepared composites was substantially the same as the amount of the corresponding starting material. The specific content values are shown in Table 1.

### Example 4

S0: 0.035 mol manganese bromide, 0.03 mol potassium citrate, and 0.05 mol copper nitrate were dissolved in 50 mL of water to prepare an impregnation solution; 8.0 g of nano iron oxide particles having an average crystal grain diameter of 16 nm were weighed out; the impregnation solution was mixed with the nano iron oxide particles, and an impregnation treatment was performed by a slurry impregnation method at an impregnation ratio (molar ratio) of Fe:Br:K:Cu = 100:7.0:3.0:5.0 and at an impregnation temperature of 37 °C for 3 h; and the impregnated solid material was dried at 25 °C for 8 h to obtain a precursor.

S1: At 430 °C and under a pressure of 3.0 atm, the precursor prepared in step S0 was kept in H₂ at a flow rate of 15000 mL/h/g for 2 h for reduction and surface purification treatment to obtain an intermediate product.

S2: The intermediate product was cooled to 350 °C and in contact with a mixed gas at this temperature to prepare a pre-carbide, wherein the pressure of the system was 3.0 atm, the flow rate of the mixed gas was 12000 mL/h/g, and the treatment time was 6 h; the mixed gas was a mixed gas of H₂ and CO, and the molar ratio of H₂ to CO was 30:1. After the treatment was completed, a θ-iron-carbide composite was prepared and labeled as CX4.

### Example 4-1

In this example, the θ-iron-carbide composite was prepared using substantially the same starting materials and process as in Example 1, the only difference being that in step S1, the flow rate of H₂ was 1200 mL/h/g. The finally prepared θ-iron-carbide composite was labeled as CX4-1.

### Example 4-2

In this example, the θ-iron-carbide composite was prepared using substantially the same starting materials and process as in Example 1, the only difference being that in step S1, the flow rate of H₂ was 16000 mL/h/g. The finally prepared θ-iron-carbide composite was labeled as CX4-2.

### Example 4-3

In this example, the θ-iron-carbide composite was prepared using substantially the same starting materials and process as in Example 1, the only difference being that in step S1, the flow rate of H₂ was 10000 mL/h/g. The finally prepared θ-iron-carbide composite was labeled as CX4-3.

### Example 4-4

In this example, the θ-iron-carbide composite was prepared using substantially the same starting materials and process as in Example 1, the only difference being that the carbonization temperature in step S2 was 300 °C. The finally prepared θ-iron-carbide composite was labeled as CX4-4.

### Example 4-5

In this example, the θ-iron-carbide composite was prepared using substantially the same starting materials and process as in Example 1, the only difference being that the carbonization temperature in step S2 was 470 °C. The finally prepared θ-iron-carbide composite was labeled as CX4-5.

### Example 4-6

In this example, the θ-iron-carbide composite was prepared using substantially the same starting materials and process as in Example 1, the only difference being that the carbonization temperature in step S2 was 400 °C. The finally prepared θ-iron-carbide composite was labeled as CX4-6.

### Example 4-7

In this example, the θ-iron-carbide composite was prepared using substantially the same starting materials and process as in Example 1, the only difference being that the reduction temperature in step S1 was 500 °C. The finally prepared θ-iron-carbide composite was labeled as CX4-7.

### Example 4-8

In this example, the θ-iron-carbide composite was prepared using substantially the same starting materials and process as in Example 1, the only difference being that the carbonization pressure in step S2 was 17 atm. The finally prepared θ-iron-carbide composite was labeled as CX4-8.

### Example 4-9

In this example, the θ-iron-carbide composite was prepared using substantially the same starting materials and process as in Example 1, the only difference being that the reduction time in step S1 was 12 h. The finally prepared θ-iron-carbide composite was labeled as CX4-9.

### Example 4-10

In this example, the θ-iron-carbide composite was prepared using substantially the same starting materials and process as in Example 1, the only difference being that the carbonization time in step S2 was 48 h. The finally prepared θ-iron-carbide composite was labeled as CX4-10.

### Example 5

S0: 0.035 mol manganese bromide and 0.02 mol potassium gluconate were dissolved in 50 mL of water to prepare an impregnation solution; 8.0 g of nano iron oxide particles having an average crystal grain diameter of 20 nm were weighed out; the impregnation solution was mixed with the nano iron oxide particles, and an impregnation treatment was performed by a slurry impregnation method at an impregnation ratio (molar ratio) of Fe:Br:K = 100:7.0:2.0 and at an impregnation temperature of 37 °C for 2 h; and the impregnated solid material was dried at 25 °C for 6 h to obtain a precursor.

S1: At 430 °C and under a pressure of 2.0 atm, the precursor prepared in step S0 was kept in H₂ at a flow rate of 12000 mL/h/g for 2 h for reduction and surface purification treatment to obtain an intermediate product.

S2: The intermediate product was cooled to 350 °C and in contact with a mixed gas at this temperature to prepare a pre-carbide, wherein the pressure of the system was 2.0 atm, the flow rate of the mixed gas was 10000 mL/h/g, and the treatment time was 6 h; the mixed gas was a mixed gas of H₂ and CO, and the molar ratio of H₂ to CO was 30:1. After the treatment was completed, a θ-iron-carbide composite was prepared and labeled as CX5.

### Comparative Example 1

In this example, the θ-iron-carbide composite was prepared using substantially the same starting materials and process as in Example 1, the only difference being that in step S21, the impregnation ratio was Fe:Br:K = 100:50:2. The finally prepared θ-iron-carbide composite was labeled as DX1.

### Comparative Example 2

In this example, the θ-iron-carbide composite was prepared using substantially the same starting materials and process as in Example 1, the only difference being that in step S21, during the preparation of an impregnation solution, manganese bromide was not added, and only potassium nitrate was added. The finally prepared θ-iron-carbide composite was labeled as D2.

### Comparative Example 3

In this example, the θ-iron-carbide composite was prepared using substantially the same starting materials and process as in Example 1, the only difference being that in step S21, manganese bromide was replaced by manganese chloride in an equivalent amount to prepare an impregnation solution, and an impregnation treatment was performed on the nanoiron particles using the impregnation solution. The finally prepared θ-iron-carbide composite was labeled as DX3.

### Comparative Example 4

The θ-iron carbide labeled as D4 was prepared using the same starting materials and procedures as in steps S1 to S2 of Example 1 without the impregnation procedure in S21.

### Comparative Example 5

In this example, the θ-iron-carbide composite was prepared using substantially the same starting materials and process as in Example 1, the only difference being that in step S2, the temperature was decreased to 270 °C for operation. The finally prepared θ-iron-carbide composite was labeled as DX5.

The θ-iron-carbide composites, θ-iron carbides, and the like prepared in the examples and comparative examples were subjected to XRD, Mössbauer spectrometry, and ICP measurements, where the contents of the θ-iron carbides are all calculated as 100 mol, and the related contents all refer to the number of moles. The specific results are shown in Table 1.

The catalytic reaction performance of the θ-iron-carbide composites, θ-iron carbides, and the like prepared in the examples and comparative examples was evaluated in a slurry bed continuous reactor. The loading amount of the catalyst was 9.0 g. Evaluation conditions: T = 283 °C; P = 2.70 MPa; H₂:CO = 2.1:1; total amount of (H₂+CO) = 15000 mL/h/g-_{Fe} (standard state flow rate, relative to the Fe element); cycle ratio: 1.2. The reaction was performed, and the reaction products were analyzed by gas chromatography. The evaluation data of the reaction performance after reaction for 24 h and 300 h are shown in Tables 2 and 3.

**Table 1**

| Sample | Content of θ-iron carbide | Halide ion | | Additional cation | | Crystal grain diameter (nm) | Additional iron element | Halide |
|---|---|---|---|---|---|---|---|---|
| | | Type | Content | Type | Content | | | |
| CX1 | 100 | Br⁻ | 7 | K⁺ | 2 | 20 | 0 | Manganese bromide |
| CX1-1 | 100 | Br⁻ | 7 | K⁺ | 2 | 21 | 0 | Iron(II) bromide |
| CX1-2 | 100 | Br⁻ | 0.3 | K⁺ | 2 | 19 | 0 | Copper bromide |
| CX1-3 | 100 | Br⁻ | 10 | K⁺ | 2 | 19 | 0 | Cobalt bromide |
| CX1-4 | 100 | Br⁻ | 20 | K⁺ | 2 | 22 | 0 | Molybdenum bromide |
| CX1-5 | 100 | Br⁻ | 30 | K⁺ | 2 | 20 | 0 | Manganese bromide |
| CX1-6 | 100 | Br⁻ | 35 | K⁺ | 2 | 21 | 0 | Manganese bromide |
| CX1-7 | 100 | Br⁻ | 39 | K⁺ | 2 | 22 | 0 | Manganese bromide |
| CX2 | 100 | I⁻ | 0.3 | K⁺ | 2 | 19 | 0 | Manganese iodide |
| CX2-1 | 100 | I⁻ | 39 | K⁺ | 2 | 20 | 0 | Manganese iodide |
| CX3 | 100 | Br⁻ | 7 | / | 0 | 20 | 0 | Manganese bromide |
| CX3-1 | 100 | Br⁻ | 7 | K⁺ | 0.1 | 21 | 0 | Manganese bromide |
| CX3-2 | 100 | Br⁻ | 7 | K⁺ | 5 | 20 | 0 | Manganese bromide |
| CX3-3 | 100 | Br⁻ | 7 | K⁺ | 10 | 21 | 0 | Manganese bromide |
| CX3-4 | 100 | Br⁻ | 7 | Cu²⁺ | 18 | 20 | 0 | Manganese bromide |
| CX3-5 | 100 | Br⁻ | 7 | Mn²⁺ | 22 | 20 | 0 | Manganese bromide |
| CX3-6 | 100 | Br⁻ | 7 | Na⁺ | 5 | 20 | 0 | Manganese bromide |
| CX3-7 | 100 | Br⁻ | 7 | Nd³⁺ | 7 | 21 | 0 | Manganese bromide |
| CX3-8 | 100 | Br⁻ | 7 | Ca²⁺ | 3 | 21 | 0 | Manganese bromide |
| CX4 | 100 | Br⁻ | 7 | K⁺ Cu²⁺ | 3 5 | 16 | 0 | Manganese bromide |
| CX4-1 | 100 | Br⁻ | 7 | K⁺ | 2 | 22 | 0 | Manganese bromide |
| CX4-2 | 100 | Br⁻ | 7 | K⁺ | 2 | 20 | 0 | Manganese bromide |
| CX4-3 | 100 | Br⁻ | 7 | K⁺ | 2 | 21 | 0 | Manganese bromide |
| CX4-4 | 100 | Br⁻ | 7 | K⁺ | 2 | 23 | 0 | Manganese bromide |
| CX4-5 | 100 | Br⁻ | 7 | K⁺ | 2 | 22 | 0 | Manganese bromide |
| CX4-6 | 100 | Br⁻ | 7 | K⁺ | 2 | 22 | 0 | Manganese bromide |
| CX4-7 | 100 | Br⁻ | 7 | K⁺ | 2 | 21 | 0 | Manganese bromide |
| CX4-8 | 100 | Br⁻ | 7 | K⁺ | 2 | 20 | 0 | Manganese bromide |
| CX4-9 | 100 | Br⁻ | 7 | K⁺ | 2 | 21 | 0 | Manganese bromide |
| CX4-10 | 100 | Br⁻ | 7 | K⁺ | 2 | 20 | 0 | Manganese bromide |
| CX5 | 100 | Br⁻ | 7 | K⁺ | 2 | 20 | 0 | Manganese bromide |
| DX1 | 40 | Br⁻ | 125.0 | K⁺ | 5.0 | 24 | 60 | Manganese bromide |
| D2 | 100 | / | 0 | K⁺ | 2 | 20 | 0 | / |
| DX3 | 100 | Cl⁻ | 7 | K⁺ | 2 | 21 | 0 | Manganese chloride |
| D4 | 100 | / | 0 | / | 0 | 20 | 0 | / |
| DX5 | 37 | Br⁻ | 18.9 | K⁺ | 5.4 | 21 | 63 | Manganese bromide |

**Table 2**

| Sample No. | Data after reaction for 24 h | | | | |
|---|---|---|---|---|---|
| | CO conversion rate (%) | CO₂ selectivity (%) | CH₄ selectivity (%) | Utilization efficiency of carbon atoms (%) | Effective product selectivity (%) |
| CX1 | 82.7 | 3.0 | 4.5 | 97.0 | 92.4 |
| CX1-1 | 84.1 | 3.0 | 4.0 | 97.0 | 93.0 |
| CX1-2 | 73.1 | 3.1 | 4.8 | 96.9 | 92.2 |
| CX1-3 | 83.3 | 2.9 | 4.6 | 97.1 | 92.4 |
| CX1-4 | 83.2 | 2.9 | 4.4 | 97.1 | 92.7 |
| CX1-5 | 74.1 | 3.1 | 4.9 | 96.9 | 92.1 |
| CX1-6 | 75.0 | 3.0 | 4.5 | 97.0 | 92.5 |
| CX1-7 | 74.8 | 3.0 | 5.0 | 97.0 | 91.9 |
| CX2 | 73.8 | 3.1 | 5.2 | 96.9 | 91.8 |
| CX2-1 | 74.9 | 3.4 | 4.7 | 96.6 | 92.0 |
| CX3 | 74.6 | 2.9 | 6.1 | 97.1 | 91.0 |
| CX3-1 | 83.3 | 2.8 | 4.4 | 97.2 | 92.7 |
| CX3-2 | 85.2 | 2.4 | 4.6 | 97.6 | 93.0 |
| CX3-3 | 82.7 | 2.5 | 4.8 | 97.5 | 92.7 |
| CX3-4 | 74.7 | 3.9 | 5.8 | 96.1 | 90.3 |
| CX3-5 | 74.7 | 3.3 | 6.1 | 96.7 | 90.6 |
| CX3-6 | 84.0 | 2.9 | 4.3 | 97.1 | 92.8 |
| CX3-7 | 84.8 | 2.6 | 6.2 | 97.4 | 91.2 |
| CX3-8 | 83.3 | 3.3 | 4.4 | 96.7 | 92.3 |
| CX4 | 84.9 | 2.9 | 4.6 | 97.1 | 92.5 |
| CX4-1 | 75.2 | 3.8 | 4.5 | 96.2 | 91.7 |
| CX4-2 | 74.8 | 3.8 | 4.8 | 96.2 | 91.3 |
| CX4-3 | 83.3 | 2.6 | 4.8 | 97.4 | 92.6 |
| CX4-4 | 74.2 | 3.0 | 4.5 | 97.0 | 92.5 |
| CX4-5 | 75.1 | 3.2 | 5.0 | 96.8 | 91.8 |
| CX4-6 | 82.8 | 3.2 | 4.7 | 96.8 | 92.0 |
| CX4-7 | 74.6 | 3.6 | 4.7 | 96.4 | 91.7 |
| CX4-8 | 74.4 | 3.8 | 4.6 | 96.2 | 91.6 |
| CX4-9 | 76.0 | 3.7 | 4.9 | 96.3 | 91.4 |
| CX4-10 | 74.7 | 3.4 | 5.1 | 96.6 | 91.6 |
| CX5 | 84.9 | 2.3 | 4.7 | 97.7 | 92.9 |
| DX1 | 35.2 | 29.8 | 17.5 | 70.2 | 52.7 |
| D2 | 94.0 | 40.6 | 3.6 | 59.4 | 55.8 |
| DX3 | 78.2 | 14.4 | 4.9 | 85.6 | 80.7 |
| D4 | 85.3 | 19.6 | 9.8 | 80.4 | 70.7 |
| DX5 | 59.1 | 5.4 | 8.3 | 94.6 | 86.3 |

**Table 3**

| Sample No. | Data after reaction for 300 h | | | | |
|---|---|---|---|---|---|
| | CO conversion rate (%) | CO₂ selectivity (%) | CH₄ selectivity (%) | Utilization efficiency of carbon atoms (%) | Effective product selectivity (%) |
| CX1 | 82.0 | 3.5 | 5.2 | 96.5 | 91.3 |
| CX1-1 | 82.6 | 4.0 | 4.2 | 96.0 | 91.8 |
| CX1-2 | 72.6 | 3.7 | 5.5 | 96.3 | 90.8 |
| CX1-3 | 82.2 | 3.4 | 5.6 | 96.6 | 90.9 |
| CX1-4 | 82.0 | 3.4 | 5.3 | 96.6 | 91.3 |
| CX1-5 | 73.5 | 3.3 | 4.9 | 96.7 | 91.8 |
| CX1-6 | 73.6 | 3.7 | 5.2 | 96.3 | 91.1 |
| CX1-7 | 73.7 | 3.2 | 5.5 | 96.8 | 91.3 |
| CX2 | 72.8 | 3.3 | 5.5 | 96.7 | 91.2 |
| CX2-1 | 73.6 | 3.5 | 5.4 | 96.5 | 91.0 |
| CX3 | 73.2 | 2.9 | 7.1 | 97.1 | 90.0 |
| CX3-1 | 82.7 | 3.3 | 4.8 | 96.7 | 91.9 |
| CX3-2 | 84.4 | 3.3 | 5.5 | 96.7 | 91.2 |
| CX3-3 | 81.5 | 3.1 | 4.9 | 96.9 | 92.0 |
| CX3-4 | 73.5 | 3.9 | 5.9 | 96.1 | 90.2 |
| CX3-5 | 73.9 | 4.2 | 6.3 | 95.8 | 89.5 |
| CX3-6 | 83.3 | 3.6 | 4.8 | 96.4 | 91.6 |
| CX3-7 | 84.3 | 3.5 | 6.7 | 96.5 | 89.8 |
| CX3-8 | 82.2 | 3.9 | 4.4 | 96.1 | 91.7 |
| CX4 | 83.9 | 3.1 | 5.5 | 96.9 | 91.3 |
| CX4-1 | 74.5 | 4.1 | 5.4 | 95.9 | 90.4 |
| CX4-2 | 73.9 | 4.6 | 5.4 | 95.4 | 90.0 |
| CX4-3 | 82.4 | 2.7 | 5.6 | 97.3 | 91.6 |
| CX4-4 | 72.8 | 3.4 | 5.5 | 96.6 | 91.2 |
| CX4-5 | 73.8 | 3.7 | 5.9 | 96.3 | 90.5 |
| CX4-6 | 81.3 | 3.6 | 5.5 | 96.4 | 90.9 |
| CX4-7 | 73.6 | 3.9 | 4.9 | 96.1 | 91.3 |
| CX4-8 | 81.9 | 2.3 | 5.3 | 97.7 | 92.4 |
| CX4-9 | 75.0 | 4.2 | 5.4 | 95.8 | 90.5 |
| CX4-10 | 73.5 | 3.4 | 5.2 | 96.6 | 91.4 |
| CX5 | 84.3 | 2.7 | 5.6 | 97.3 | 91.6 |
| DX1 | 26.2 | 35.4 | 22.1 | 64.6 | 42.5 |
| D2 | 87.4 | 40.7 | 4.2 | 59.3 | 55.1 |
| DX3 | 76.6 | 14.7 | 5.1 | 85.3 | 80.1 |
| D4 | 84.6 | 20.3 | 9.9 | 79.7 | 69.9 |
| DX5 | 48.1 | 10.3 | 11.7 | 89.7 | 78.1 |

It can be seen from the results of the examples, the comparative examples, and Tables 1-3 that, compared with Example 1, the impregnation solution in Comparative Example 2 did not contain manganese bromide, indicating that the composite prepared in Comparative Example 2 did not contain manganese ions and bromide ions. The results in Table 2 show that although the CO conversion rate in Comparative Example 2 was higher than that in Example 1, the CO₂ selectivity of 40.6% in Comparative Example 2 was much higher than the CO₂ selectivity of 3.0% in Example 1, and the utilization efficiency of carbon atoms (59.4%) and the effective product selectivity (55.8%) in Comparative Example 2 were much lower than the utilization efficiency of carbon atoms (97.0%) and the effective product selectivity (92.4%) in Example 1. Therefore, compared with the composite in Comparative Example 2, the composite in Example 1 can improve the overall efficiency of the reaction and optimize the comprehensive results of the reaction.

Further, Example 1-1 differs from Example 1 in that the halide used was different, which was iron(II) bromide. The results in Table 2 show that the reaction performance data of Example 1-1 were not greatly different from that of Example 1, indicating that, compared with Comparative Example 2, the improvement in performance of Example 1 is mainly brought by the addition of bromide ions rather than manganese ions.

Furthermore, Example 2 mainly differs from Example 1-2 in that iodide ions, rather than bromide ions, were introduced into the prepared composite. The results in Table 2 show that the reaction performance data of Example 2 were not greatly different from that of Example 1-2, indicating that the introduction of iodide ions into the iron carbide can also play a role in improving the comprehensive performance of the reaction. In addition, Comparative Example 3 differs from Example 1 in that chloride ions, rather than bromide ions, were introduced into the prepared composite. The results in Table 2 show that all the reaction performances of Comparative Example 3 were significantly lower than those of Example 1, and the optimization of the comprehensive results of the reaction could not be achieved.

Furthermore, bromide ions were also introduced into the iron carbide in Comparative Example 1, but the content of bromide ions was higher, which is beyond the range of the molar ratio of 100:(0.1-40) of θ-iron-carbide to halide ions defined in one embodiment of the present disclosure. As can be seen from the results in Table 2, the CO conversion rate in Comparative Example 1 was only 35.2%, which was much lower than the CO conversion rate of 82.7% in Example 1, and the utilization efficiency of carbon atoms and the effective product selectivity in Comparative Example 1 were also significantly lower than those in Example 1. Therefore, when the content of bromide ions in the iron carbide composite exceeds a certain range, comprehensive optimization of the reaction results cannot be achieved either.

Furthermore, Examples 1 to 1-7 mainly differ from each other in the content of bromide ions, and combined with the results in Tables 2 and 3, the molar ratio of iron carbide (or iron element) to bromide ions in the prepared composite was preferably 100:(7-20).

Furthermore, Examples 3 to 3-8 mainly differ from each other in the content of the additional cation, and combined with the results in Tables 2 and 3, the molar ratio of iron carbide (or iron element) to the additional cation in the prepared composite was preferably 100:(0.1-10).

In addition, as can be seen from the results in Table 3, the reactions catalyzed by the composites in the examples of the present disclosure were able to maintain the CO conversion rate, product selectivity, etc., stable for a relatively long period of time. Therefore, by allowing the θ-iron-carbide composite to contain halide ions, such as bromide or iodide ions, limiting the content of halide ions to a specific range, and using the θ-iron-carbide composite as a catalyst for the Fischer-Tropsch synthesis reaction, the overall efficiency of the reaction can be improved, and the optimization of the comprehensive results of the reaction can be achieved.

Based on the above description, the θ-iron-carbide composites containing halide ions, such as bromide or iodide ions, prepared in the examples of the present disclosure are used as a catalyst for the syngas conversion reaction under industrial conditions, and can exhibit extremely low CO₂ selectivity, relatively low CH₄ selectivity, and extremely high utilization efficiency of carbon atoms and effective product selectivity while maintaining a high CO conversion rate (> 60%). A long-period experiment was further performed, and it can be seen from the data after reaction for 300 h in Table 3 that after the θ-iron-carbide composites in the examples of the present disclosure were continuously operated as a catalyst in a stirred tank for a long period, the CO conversion rate, the product selectivity, the utilization efficiency of carbon atoms, and the effective product selectivity all remained stable and did not change significantly, indicating good operation stability. Therefore, by using the θ-iron-carbide composites in the examples of the present disclosure as a catalyst for the syngas conversion reaction, the comprehensive optimization of the reaction results can be achieved.

Unless otherwise defined, all terms used herein have the meanings commonly understood by those skilled in the art.

The embodiments described in the present disclosure are for illustrative purposes only and are not intended to limit the scope of the present disclosure, and various other substitutions, alterations, and modifications may be made by those skilled in the art within the scope of the present disclosure. Therefore, the present disclosure is not limited to the embodiments described above, but is limited only by the claims.

## Claims

1. A preparation method for a metallic θ-iron-carbide composite, comprising the following steps:
S0: providing a precursor, the precursor is nanoiron and/or a nano iron compound or nanoiron and/or a nano iron compound comprising bromide ions and/or iodide ions; and the nano iron compound is capable of preparing nanoiron by a reduction reaction;
S1: performing reduction and surface purification treatment on the precursor at 300-500 °C under the action of hydrogen to obtain an intermediate product; and
S2: performing carbide preparation treatment on the intermediate product at 300-470 °C in a mixed gas atmosphere;
wherein the mixed gas comprises hydrogen and carbon monoxide in a molar ratio of 5:1 to 110:1;
a first impregnation treatment is performed on said nanoiron and/or nano iron compound by an impregnation solution to obtain said nanoiron and/or nano iron compound comprising bromide ions and/or iodide ions; when the precursor is said nanoiron and/or nano iron compound, a second impregnation treatment is performed on the product in step S2 by the impregnation solution.

2. The preparation method according to claim 1, wherein the impregnation solution comprises bromide ions and/or iodide ions; and/or
the nano iron compound comprises one or more of nano iron oxide, nanomagnetite, nano goethite, and nano iron hydrous oxide; and/or
the nanoiron or the nano iron compound has an average crystal grain diameter of 6 nm to 35 nm.

3. The preparation method according to claim 1 or 2, wherein starting materials for preparing the impregnation solution comprise an impregnation compound, and the impregnation compound comprises a water-soluble bromide and/or iodide; further, the impregnation compound comprises one or more of a bromide and an iodide containing manganese, molybdenum, cobalt, a rare earth metal element, iron, and copper; and/or
the first impregnation treatment or the second impregnation treatment is performed by a slurry impregnation method, a saturated impregnation method, or a supersaturated impregnation method.

4. The preparation method according to claim 3, wherein the impregnation compound further comprises an additional compound selected from one or more of salts of copper, molybdenum, an alkali metal, manganese, a rare earth metal, an alkaline earth metal, and cobalt.

5. The preparation method according to any one of claims 1 to 4, wherein the treatment in step S1 is performed under a pressure of 0.13-9.5 atm for 1.2-26 h, and the gas flow rate of hydrogen is 600-21000 mL/h/g; and/or
the treatment in step S2 is performed under a pressure of 0-21 atm for 3-72 h, and the gas flow rate of the mixed gas is 500-31000 mL/h/g.

6. A θ-iron-carbide composite prepared by the preparation method according to any one of claims 1 to 5.

7. A θ-iron-carbide composite, comprising θ-iron-carbide and a halogen element, the θ-iron-carbide and the halogen element are in a molar ratio of 100:(0.1-40); the halogen element is a bromine element and/or an iodine element; and the number of moles of the θ-iron-carbide is based on the number of moles of an iron element contained therein.

8. The θ-iron-carbide composite according to claim 7, wherein the θ-iron-carbide and the halogen element are in a molar ratio of 100:(0.35-32); and/or
the composite has an average crystal grain diameter of 7-42 nm; and/or
the halogen element is present in the form of a halide ion, the θ-iron-carbide composite comprises a halide cation, the halide cation is capable of maintaining charge balance with the halide ion, and the halide cation comprises one or more of a first metal ion and a complex cation; and/or
the θ-iron-carbide composite comprises an additional cation, and the θ-iron-carbide and the additional cation are in a molar ratio of 100:(0.1-22), and further 100:(0.1-18);
the additional cation is selected from one or more of a molybdenum ion, a rare earth ion, a chromium ion, an alkali metal ion, an alkaline earth metal ion, a cobalt ion, a manganese ion, and a copper ion.

9. The θ-iron-carbide composite according to claim 8, wherein the first metal ion comprises one or more of an iron ion, a manganese ion, a copper ion, a cobalt ion, a molybdenum ion, a lanthanum ion, a cerium ion, and a neodymium ion; the complex cation comprises one or more of a hexaammine manganese ion, a hexaammine iron ion, and a hexaammine copper ion.

10. A catalyst, comprising the θ-iron-carbide composite according to any one of claims 6 to 9.

11. Use of the θ-iron-carbide composite according to any one of claims 6 to 9 or the catalyst according to claim 10 in a syngas conversion reaction.

12. Use of the θ-iron-carbide composite according to any one of claims 6 to 9 or the catalyst according to claim 10 in a reaction for the synthesis of C and H fuels and/or chemicals on the basis of the Fischer-Tropsch synthesis principle.

13. A syngas conversion process, comprising contacting the catalyst according to claim 10 with syngas under reaction conditions.
